# EUROPEAN PATENT SPECIFICATION

(11) **EP 3 622 103 B1**
(45) Date of publication and mention of the grant of the patent: **11.11.2026**
(21) Application number: 17726205.2
(22) Date of filing: 09.05.2017
(51) Int. Cl.: D01F 1/10, B33Y 70/00, C06B 25/18, D01F 2/26

(54) **THERMOPLASTIC FILAMENT FOR USE IN THREE-DIMENSIONAL PRINTING PROCESSES FOR THE MANUFACTURE OF ENERGETIC OBJECTS**
THERMOPLASTISCHES FILAMENT ZUR VERWENDUNG IN DREIDIMENSIONALEN DRUCKVORGÄNGEN ZUR HERSTELLUNG VON ENERGETISCHEN GEGENSTÄNDEN
FILAMENT THERMOPLASTIQUE DESTINÉ À ÊTRE UTILISÉ DANS DES PROCÉDÉS D'IMPRESSION EN TROIS DIMENSIONS POUR LA FABRICATION D'OBJETS ÉNERGÉTIQUES

(43) Date of publication of application: 18.03.2020
(73) Proprietor: Nitrochemie Wimmis AG, 3752 Wimmis (CH)
(72) Inventor: SCHAEDELI, Ulrich, 1737 Plasselb (CH); RAMIN, Michael, 3634 Thierachern (CH); VOGELSANGER, Beat, 8335 Hittnau (CH); ANTENEN, Dominik, 3665 Wattenwil (CH)
(74) Representative: Müller Schupfner & Partner Patent- und Rechtsanwaltspartnerschaft mbB (Muc)
(86) International application number: PCT/EP2017/061056
(87) International publication number: WO 2018/206087

(56) References cited:
- EP-A1- 0 490 258
- WO-A1-2017/043975
- SAMUEL CLARK LIGON ET AL: "Polymers for 3D Printing and Customized Additive Manufacturing", CHEMICAL REVIEWS, vol. 117, no. 15, 30 July 2017 (2017-07-30), US, pages 10212 - 10290, XP055516091, ISSN: 0009-2665, DOI: 10.1021/acs.chemrev.7b00074
- DATABASE WPI Week 201725, Derwent World Patents Index; AN 2017-097352, XP002776977

## Description

### Technical Field

The innovation concerns a thermoplastic energetic filament for use in three-dimensional printing processes for manufacture of energetic objects which can be used for propulsion of projectiles in weapons and for solid rocket engines.

### Background Art

Three-dimensional printing or additive manufacturing is a process of making three dimensional solid objects from a digital file. In a three-dimensional printing process a three-dimensional object is built by sequentially applying layer after layer of a printing material until the desired object is completed. Depending on the properties of the object, the printing material and the three-dimensional printing process must be selected accordingly. Within the last years a rapid growth in the field of three-dimensional printing technology has been achieved. The areas where three-dimensional printing processes are successfully used have been dramatically increased. Examples of new areas are three-dimensional printing of food items and concrete structures. Three-dimensional printing of food offers a range of potential benefits, since it may help to convert alternative ingredients such as proteins from algae, beet leaves, or insects into tasty products, or allows for food customization and therefore tune up with individual needs and preferences. Three-dimensional printing in construction refers to various technologies that use three-dimensional printing processes as a core method to fabricate building parts or construction components.

However, despite the broad range of areas where three-dimensional printing processes are used, and the broad range of materials which are used in all these areas of use, virtually no information is found in the public domain on three dimensional printing processes in the field of propellant charges which can be used for the acceleration of projectiles in weapons or for solid rocket engines. There is a conference presentation by the US Army RDECOM and ARDEC (ARDEC Propulsion Science & Technology, Insensitive Munitions and Energetic Materials Conference, 13^{th} September 2016) which shows the involvement in various areas of three-dimensional printing of energetic materials but without providing information on technical details. Another example showing the involvement of the US Army RDECOM and ARDEC is a conference presentation with the title "ARDEC Energetics" which was presented at the Joint Armaments Conference 2014 (http://www.dtic.mil/ndia/2014/ar-maments-/Wed16567_Wejsa.pdf), but without providing technical information on printing materials and techniques. There is an additional document showing the involvement of ARDEC in the three-dimensional printing area, again without going into technical details: Additive Manufacturing (3D Printing) of Gun Propulsion Charges, AICHE North Jersey Dinner Meeting, 15. March 2016 (https://www.ai-che.org/community/sites/local-sections/north-jersey/events/aiche-north-jersey-din-ner-meeting-additi-ve-manufacturing-3d-printing-gun-propulsion-charges).

A more recent example is a paper entitled "A 3D-Printed Grenade Launcher: Meet RAMBO", again without technical details on the printing technology (http://soldiersys-tems.net/2017/03/13/a-3d-printed-grenade-launcher-meet-rambo). Also the Lawrence Livermore National Laboratory is investigating in three-dimensional printing technologies, but the literature gives no hints regarding the printing of energetic parts for propulsion or rocket engines (https://ipo.llnl.gov/technologies/energy_materials).

Finally, also the TNO organization in Holland is actively investigating three-dimensional printing processes, but again no information on materials used for the printing of energetic parts is disclosed (https://www.tno.nl/en/focus-areas/industry/flexible-free-form-products/additive-manufacturing/).

Since no information is provided in the public domain on energetic materials which can be used in a three-dimensional printing process for the manufacturing of propellant charges for accelerating projectiles or for solid rocket engine uses, there is a strong need to find a technical solution for providing an energetic material which has a high energy content comparable to existing propellants and can be used in a three-dimensional printing process for the manufacturing of propellant charges.

Among the seven categories of additive manufacturing as defined by the American Society for Testing and Materials (ASTM) in 2010, the category "Material Extrusion" was assessed by the applicant Nitrochemie for being most suited for the targeted application. The main reason for this assessment lies in the fact that the heated area where the thermoplastic energetic material is in contact to heat for melting during the printing process has a relatively small volume and a short contact time. The other parts of the energetic material, namely the residual filament string and the energetic object under construction, are not exposed to heat. This setup has benefits regarding safety and thermal degradation during the three-dimensional printing process.

Another category according to the definition by ASTM is "Vat Photopolymerization" with SLA (Stereo-lithography) as the most used printing technique. This setup allows producing objects in a layer by layer fashion using photopolymerization, a process by which light causes chains of molecules in a liquid vat bath to link, thereby forming a network of crosslinked polymers which then make up the body of a three-dimensional object.

However, the SLA method has distinct disadvantages for the envisioned application: Readily available and cost effective nitrocellulose cannot be used in the vat bath due to the high viscosity of solutions in (meth)acrylic crosslinkable solvent pre-polymers. An alternative would be the use of photopolymerizable energetic liquids. Unfortunately, such liquids are not commercially available and their technical suitability for the envisioned application is not proven. This makes the combined use of a crystalline energetic material like e.g. RDX, dispersed in a vat bath consisting of liquid inert polymer-precursors, e.g. mixtures of multifunctional (meth)acrylates, the only viable approach in the "Vat Photopolymerization" category. However, to compensate the inert (meth)acrylate binder content, high loadings of up to 80% of the crystalline energy carrier are needed in the vat formulation in order to get to the required energy content. This causes problems with sedimentation of the crystalline energy carrier in the vat bath. Additionally, the free radicals generated by the photoinitiator used for the crosslinking can cause degradation of the nitramine or nitrate functions of the crystalline energy carrier, thereby negatively affecting the chemical stability of the final energetic object. Finally, propellant charges composed from high RDX loads are known to suffer from poor IM-properties, namely at cold impact temperatures, and from a high pressure exponent.

Other three-dimensional printing processes according to the ASTM definition are "Material Jetting", "Binder Jetting", "Sheet Lamination" and "Powder Bed Fusion". All these processes are believed to be unfavourable for three-dimensional printing of propellants. For "Material Jetting", energetic liquids are needed, which results in the same problems as explained above for the "Vat Photopolymerization". In "Binder Jetting", an energetic powder, e.g. dry nitrocellulose, is solidified by a crosslinkable binder. In this technique large amounts of finely powderized energetic material is used, which causes a large safety risk during processing. In "Sheet Lamination", the mechanical strength of the energetic material is considered to be insufficient for the envisioned applications. Finally, the categories "Direct Energy Deposition" / "Powder Bed Fusion" require high processing temperatures, which are not compatible with the processing of energetic materials.

WO 2017/043975 A1 discloses a propellant charge comprising one or more longitudinally extending, progressive-externally burning grains having a number of perforations passing through the grains in the length direction and wherein said grains have a cross-sectional shape (perpendicular to the grain's length direction) that is elongated.

EP 0 490 258 A1 discloses stable plasticizers for nitrocellulose/nitroguanidine-type compositions.

CN106346774A discloses an increasing material manufacturing method of solid propellant.

### Summary of the invention

It is the object of the invention to create a thermoplastic filament for use in three-dimensional printing processes for the manufacture of energetic objects which can be used for propulsion of projectiles in weapons and for solid rocket engines.

The solution of the invention is specified by the features of claim 1. According to the invention the thermoplastic filament comprises at least one energetic plasticizer and nitrocellulose, wherein the ratio of the concentration of the at least one energetic plasticizer to the concentration of the nitrocellulose is between 0.5:1 to 2:1 by weight.

It was found that the use of a ratio between the at least one energetic plasticizer and the nitrocellulose in the claimed range results in a thermoplastic filament which exhibits a melting temperature in the range of 140 - 170°C and a decomposition temperature of more than 175°C. A thermoplastic filament with these temperature characteristics may be perfectly used in a three-dimensional printing process, especially of the material extrusion type.

Use of the claimed ratio between the at least one energetic plasticizer and the nitrocellulose ensures that after processing a fully plasticised (gelatinized) matrix of the thermoplastic filament is obtained, meaning that the thermoplastic filament according to the invention contains no solid fibres from non-gelatinized nitrocellulose. The only solid parts of the thermoplastic filament may be crystals from solid additives, for example finely dispersed RDX crystals.

It was found that by raising the concentration of the energetic plasticizer the melting temperature of the thermoplastic filament decreases. If too much energetic plasticizer is used the surface of the thermoplastic filament becomes tacky and the individual thermoplastic filament strings stick together.

The energetic plasticizer used in the thermoplastic filament according to the invention must have good gelatinizing properties for nitrocellulose and must have sufficiently high energy content for the envisioned applications. In principle, the energetic plasticizer can be a liquid or a solid at ambient temperature. Examples of solid plasticizers are Me-NENA (methyl-nitratoethylnitroamine, CAS#: 17096-47-8) and DINA (diethanolnitraminedinitrate, CAS#: 4185-47-1). Examples of liquid energetic plasticizers according to the invention are Et-NENA (ethyl-nitratoethylnitroamine, CAS#: 85068-73-1), Bu-NENA (butyl-nitratoethylnitroamine, CAS#: 8246-82-6), NGL (nitroglycerine, CAS#: 55-63-0) and DEGN (diethylenglykoldinitrate, CAS#:693-21-0). Also combinations of different plasticizers are possible, e.g. mixtures of Me-NENA and Et-NENA.

Preferably, the thermoplastic filament is in the form of a string which may be rolled up. Provision of a string of thermoplastic filament has advantages for the storage, shipment and use of the thermoplastic filament in a three-dimensional printer.

The term "thermoplastic" is understood in the present application to encompass a polymeric material which becomes pliable or moldable above a specific temperature, termed "melting temperature" in the present application, and which solidifies upon cooling.

The term "filament" is understood in the present application as being a string containing an organic polymeric material which is considerable longer than it is wide.

The thermoplastic filament according to the invention may be manufactured in conventional manufacturing equipment, with or without the use of processing solvents. If processing solvents are used, the ingredients are transferred to a kneader prior to the addition of the processing solvents. After kneading, the resulting dough is pressed through a die matrix to form a solvent-wet thermoplastic filament, which is dried in a vented oven.

In a solvent-less process, the ingredients are processed on shear rollers and extruded through a heated extruder to yield the desired thermoplastic filament. Another method for obtaining a thermoplastic filament according to the invention is by solvent casting of films of the desired thickness, which contain the components of the thermoplastic filament. Acetone is an example for a usable casting solvent. The films can be cut to the targeted thermoplastic filament. In this case, a thermoplastic filament with rectangular size is obtained.

Preferably, the concentration of the at least one energetic plasticizer and the concentration of the nitrocellulose together make up at least 60%, preferably at least 75% of the weight of the thermoplastic filament.

Hence, the thermoplastic filament is essentially composed of the at least one energetic plasticizer and the nitrocellulose.

Preferably, the nitrogen content of the nitrocellulose is between 12.2 % and 13.6 %.

The nitrogen content of the nitrocellulose may be adapted to the energy content needed for the targeted application. The nitrocellulose may be composed from blends of nitrocellulose types with different nitrogen contents. Alternatively, only one nitrocellulose type with fixed nitrogen content may be used.

The at least one energetic plasticizer is selected from the group of methyl-nitratoethylnitroamine (Me-NENA, CAS-# 17096-47-8), ethyl-nitratoethylnitroamine (Et-NENA, CAS-# 17096-47-8), propyl-nitratoethylnitramine (Pr-NENA, CAS-# 82486-83-7), butyl-nitratoethylnitroamine (Bu-NENA, CAS-# 8246-82-6), diethanolnitraminedinitrate (DINA, CAS-# 4185-47-1), nitroglycerine (NGL, CAS-#: 55-63-0), diethylenglykoldinitrate (DEGN, CAS-#: 693-21), or a combination therefrom.

By varying the at least one energetic plasticizer or, if more than one energetic plasticizer is present, of the mixture of energetic plasticizers used, the energy content of the thermoplastic filament according to the present invention may be adapted to a wide range to fit the needs for a targeted application.

Examples of energetic plasticizers are aliphatic nitrateesters, nitrocompounds, nitramines and azides or combinations therefrom with an average molecular weight of 100 - 1000 g/mol.

Examples are nitroglycerine (NGL, CAS-#: 55-63-0), diethylenglykoldinitrate (DEGN, CAS-#: 693-21 0), triethylenglycoldinitrate (TEGN, CAS-#: 111-22-8), ethylenglykoldinitrate (EGDN, CAS-#: 628-96-6), 1,2,4-butantrioltrinitrate (BTTN, CAS-#: 6659-60-5), nitropentaglycerin (MTN; CAS-#: 3032-55-1), propandioltrinitrat (NIBTN, CAS-#: 20820-44-4), bis-(2,2-di¬nitro-propyl)-acetal (BDNPA, CAS-#: 5108-69-0), bis-(2,2-dinitropropyl)-formale (BDNPF, CAS-#: 5917-61-3), 1,5-diazido-3-nitroazapentane (DANPE, CAS-# 89130-65-4), azido-polyglycinazide (GAPA), methyl-nitratoethylnitroamine (Me-NENA, CAS-#: 17096-47-8), ethyl-nitratoethylnitroamine (Et-NENA, CAS # 85068-73-1), propyl-nitratoethylnitroamine (Pro-NENA, CAS-# 82486-83-7), butyl-nitratoethylnitroamine (Bu-NENA, CAS-# 8246-82-6), pentyl-nitratoethylnitroamine (Pe-NENA, CAS-# 85954-06-9) and diethanolnitraminedinitrate (DINA, CAS-# 4185-47-1). Preferred plasticizers are among the NENA family and the nitrateesters NGL or DEGN. Especially suited are Me-NENA, Et-NENA, Bu-NENA and DINA.

As an example, the energy content of a thermoplastic filament can be lowered by switching from Et-NENA to Bu-NENA.

Preferably, the thermoplastic filament has a cross-section of round, oval or rectangular shape.

The dimensions of the thermoplastic filament as well as its cross-section may be adapted to the specific type of three-dimensional printing apparatus used for manufacturing the energetic object. Preferably, the thermoplastic filament will have a diameter or an edge size of 0.5 - 3.0 mm.

The thermoplastic filament comprises at least one crystalline energy carrier, preferably in a concentration of between 1 - 30 % by weight.

Addition of a crystalline energy carrier, i.e. of a highly explosive material, to the composition of the thermoplastic filament allows a further variation of its energy content.

Said at least one crystalline energy carrier is selected from the group of hexogene (RDX, cyclotrimethylentrinitramine, CAS-# 121-82-4), Octogene (HMX, tetramethylenetetranitramine, CAS-# 2691-41-0, hexanitroisowurtzitane (CL-20, CAS-# 14913-74-7), nitroguanidine (NQ, CAS-# 70-25-7, N-metylnitramine (Tetryl, N-methyl-N,2,4,6-tetranitrobenzolamine, CAS-# 479-45-8), guanidinnitrate (CAS-#: 506-93-4), 1,1-diamino-2,2-dinitroethylen (FOX-7), N-Guanylureadinitramide (FOX-12), 5-aminotetrazole (CAS-#: 5378-49-4), ethylendinitramine (EDNA, CAS-#: 505-71-5) or a combination therefrom.

Based on availability and price, nitramine-compounds are preferred. Especially suited is hexogene (RDX).

Preferably, said thermoplastic filament comprises at least one stabilizing additive, preferably in a concentration of 0.5 - 5.0 % by weight.

The at least one stabilizing additive increases the chemical stability towards thermal degradation. Known substances with a stabilizing effect are derivatives of diphenylurea and diphenylamin.

Preferably, the at least one stabilizing additive is selected from the group of Akardite-2 (CAS-#: 13114-72-2), diphenylamine (CAS-#: 122-39-4), 2-nitrodiphenylamine (CAS-#: 119-75-5), triphenylamine (CAS-#: 603-34-9), Centralite-1 (CAS-#: 85-98-3), Centralite-2 (CAS-#: 611-92-7) or a mixture thereof.

The use of Akardite-2 is advantageous for nitrocellulose containing formulations: This stabilizing additive has a very good stabilizing efficiency for nitrocellulose and has also toxicity-related advantages since the substance is not toxic itself and forms only very minor amounts of carcinogenic N-Nitrosamines during ageing.

The thermoplastic filament comprises inert plasticizers for lowering the melting temperature, selected from the group of phthalate-esters, adipate-esters, citrate-esters and stearic-esters. The thermoplastic filament preferably comprises further burn rate modifiers, wear reducing additives or muzzle flash suppressants. Another possible additive type are molecules with multiple active sidegroups like e.g. multifunctional acrylates or methacrylates, which can be crosslinked after the construction of the propellant charge by the three-dimensional printing process is completed in order to increase its mechanical strength.

A further aspect of the present invention is directed to the use of at least one thermoplastic filament as described above in a three-dimensional printing process, preferably in a material extrusion type three-dimensional printing process, to manufacture an energetic object which can be used for propulsion of projectiles in weapons and for solid rocket engines.

Preferably, the three-dimensional printing process is a fused deposition modelling process.

Use of said thermoplastic filament allows the creation of energetic objects having a complex three-dimensional structure in an efficient way using three-dimensional printing equipment available on the market.

Preferably, at least two thermoplastic filaments having different energy contents and/or different burning speeds are used to manufacture said energetic object.

This allows the incorporation of functional gradients in the energetic object being printed. This unique ability allows fine-tuning the burning characteristic of the energetic object in a way which has so far not been possible with conventional manufacturing techniques. In order to visualize the different zones in the energetic object, the different filaments may by coloured by different dyes, e.g. red for the higher energy filament and blue for the filament with the lower energy content.

As noted before, a key element of the present invention is the surprising finding that the combination of nitrocellulose and of at least one energetic plasticizer can be processed into a fully plasticized thermoplastic filament which contains no solid parts from e.g. non-gelatinized nitrocellulose fibers. Another surprising element of the present invention is the unexpected finding that the thermoplastic filament is melting in a range of approximately 140 - 170°C, which allows for the thermoplastic filament to be processed in a filament three-dimensional printing process. Finally, it was a surprising and unexpected finding that the thermoplastic filaments according to the present invention have high decomposition temperatures of up to 250°C, depending on the mixing ratio of energetic plasticizer and nitrocellulose and the energy content of the thermoplastic filament. The observed decomposition temperatures of the thermoplastic filament according to the present invention is significantly higher than expected from conventional nitrocellulose-based propellants, which are typically in a range of 166 - 173°C. Another surprising element of the thermoplastic filament according to the invention is the finding that the thermoplastic filament exhibit high mechanical strength. The thermoplastic filament behaves like a normal inert plastic cord and may hardly be broken by the force applied by human hands. The mechanical strength of the thermoplastic filament according to the present invention is by far sufficient to allow for the processing in a three-dimensional filament printer using a standard feeder system

Other advantageous embodiments and combinations of features come out from the detailed description below and the totality of the claims.

### Examples

### Example 1: (not according to the invention)

In a 0.51 beaker 10g air-dried nitrocellulose with 13.6% N-content is dissolved in 100ml acetone. To this viscous solution 0.3g of Akardite-2 and 20g of a mixture consisting of 37% Me-NENA and 63% Et-NENA are added. The viscous solution is stirred until all ingredients are homogeneously dispersed and subsequently casted on a plate from polyethylene. The casting solvent acetone is evaporated in a vented hood during 3 days, after which time the resulting film is removed from the polyethylene plate and cut into rectangular strings for further analyzation.

### Physical data of example 1:

| | |
|---|---|
| String thickness: | approx. 1.0 mm |
| String width: | approx. 3.0 mm |
| Residual ethanol: | <0.01% |
| Residual acetone: | <0.01% |
| Heat of explosion: | 3769 J/g |
| Melting temperature | approx. 145°C |
| Decomposition temp.: | approx. 183 °C |

### Example 2: (not according to the invention)

In a horizontal kneader with approx. 30 liters volume, a solution composed from 1.9kg Me-NENA and 3.1kg Et-NENA in 4kg acetone is added to 6.3kg nitrocellulose with 13.25% N-content, wetted with approx. 25% ethanol and 3% water, and 100g Akardite-2. Kneading is proceeded for 120 minutes total time, whereas during the last 60 minutes a stream of air is blown over the kneader blades. The resulting dough was pressed through a die with 3mm diameter. The resulting filament strains were wrapped around a reel and dried at 25°C for 48 hours.

### Physical data of example 2:

| | |
|---|---|
| String diameter: | approx. 1.5mm |
| Residual ethanol: | <0.01% |
| Residual acetone: | <0.01% |
| Heat of explosion: | 3802 J/g |
| Melting temperature: | approx. 165°C |
| Decomposition temp.: | > 250°C |

### Example 3: (not according to the invention)

In a horizontal kneader with approx. 150 ml volume, a solution composed from 17g Me-NENA and 28g Et-NENA in 50ml acetone is added to 44g air-dried nitrocellulose with an N-content of 13.25%, 1.0g Akardite-2 and 10g RDX with a average particle site of 9 micrometers. Kneading is proceeded for 60 minutes total time. The resulting dough is pressed through a press with approx. 2mm die diameter. The resulting filament strains are air-dried at 25°C for 48 hours.

### Physical data of example 3:

| | |
|---|---|
| String diameter: | approx. 2.0mm |
| Residual ethanol: | <0.01% |
| Residual acetone: | <0.01% |
| Heat of explosion: | 3855 J/g |
| Melting temperature: | approx. 160°C |
| Decomposition temp.: | 179°C |

## Claims

1. Thermoplastic filament for use in a fused deposition modelling process for the manufacture of energetic objects which can be used for propulsion of projectiles in weapons and for solid rocket engines, comprising at least one energetic plasticizer selected from the group of methyl-nitratoethylnitroamine (CAS-#17096-47-8), ethyl-nitratoethylnitroamine (CAS-#85068-73-1), propyl-nitratoethylnitramine (CAS-#82486-83-7), butyl-nitratoethylnitroamine (CAS-#8246-82-6), diethanolnitraminedinitrate (CAS-#4185-47-1), nitroglycerine (CAS-#55-63-0), diethylenglykoldinitrate (CAS-#693-21) or a combination therefrom, and nitrocellulose, wherein the ratio of the concentration of the at least one energetic plasticizer to the concentration of the nitrocellulose is between 0.5:1 to 2:1 by weight, wherein the thermoplastic filament comprises at least one crystalline energy carrier selected from the group of cyclotrimethylentrinitramine (CAS-#121-82-4), tetramethylenetetranitramine (CAS-#2691-41-0), hexanitroisowurtzitane (CAS-#14913-74-7), nitroguanidine (CAS-#70-25-7), N-metylnitramine (CAS-#479-45-8), guanidinnitrate (CAS-#506-93-4), 1,1-diamino-2,2-dinitroethylen , N-Guanylureadinitramide, 5-aminotetrazole (CAS-#5378-49-4), ethylendinitramine (CAS-#505-71-5) or a combination therefrom, **characterized in that** the thermoplastic filament comprises an inert plasticizer selected from the group of phthalate-esters, adipate-esters, citrate-esters and stearic-esters.

2. Thermoplastic filament according to claim 1, **characterized in that** the concentration of the at least one energetic plasticizer and the concentration of the nitrocellulose together make up at least 60%, preferably at least 75% of the weight of the thermoplastic filament.

3. Thermoplastic filament according to any of claims 1 or 2, **characterized in that** the nitrogen content of the nitrocellulose is between 12.2 % and 13.6 %.

4. Thermoplastic filament according to any of claims 1 to 3, **characterized in that** the thermoplastic filament has a cross-section of round, oval or rectangular shape.

5. Thermoplastic filament according to any of claims 1 to 4, **characterized in that** said thermoplastic filament comprises the at least one crystalline energy carrier in a concentration of between 1 - 30 % by weight.

6. Thermoplastic filament according to any of claims 1 to 5, **characterized in that** said thermoplastic filament comprises at least one stabilizing additive, selected from the group 3-Methyl-1,1-diphenylurea (CAS-# 13114-72-2), diphenylamine (CAS-# 122-39-4), 2-nitrodiphenylamine (CAS-# 119-75-5), triphenylamine (CAS-# : 122-39-4), 2-nitrodiphenylamine (CAS-# 119-75-5), triphenylamine (CAS-# : 603-34-9), 1,3-Diethyl-1,3-diphenylurea (CAS-# 85-98-3), 1,3-dimethyl-1,3-diphenylurea (CAS-# 611-92-7) or a mixture thereof, preferably in a concentration of 0.5 - 5.0 % by weight.

7. Use of at least one thermoplastic filament according to any of claims 1 to 6 in a fused deposition modelling process to manufacture energetic objects which can be used for propulsion of projectiles in weapons and for solid rocket engines.

8. Use according to claim 7, **characterized in that** at least two thermoplastic filaments having different energy contents and/or different burning speeds are used to manufacture said energetic object.

## Patentansprüche

1. Thermoplastisches Filament zur Verwendung in einem Fused-Deposition-Modelling-Verfahren zur Herstellung von energetischen Objekten, die zum Antrieb von Projektilen in Waffen und für Feststoffraketenantriebe verwendet werden können, umfassend mindestens einen energetischen Weichmacher, ausgewählt aus der Gruppe bestehend aus Methyl-nitratoethylnitroamin (CAS-Nr. 17096-47-8), Ethyl-nitratoethylnitroamin (CAS-Nr. 85068-73-1), Propylnitratoethylnitroamin (CAS-Nr. 82486-83-7), Butyl-nitratoethylnitroamin (CAS-Nr. 8246-82-6), Diethanolnitramindinitrat (CAS-Nr. 4185-47-1), Nitroglycerin (CAS-Nr. 55-63-0), Diethylenglykoldinitrat (CAS-Nr.693-21) oder einer Kombination davon sowie Nitrocellulose, wobei das Gewichtsverhältnis der Konzentration des mindestens einen energetischen Weichmachers zur Konzentration der Nitrocellulose zwischen 0,5:1 und 2:1 liegt, wobei das thermoplastische Filament mindestens einen kristallinen Energieträger umfasst, ausgewählt aus der Gruppe bestehend aus Cyclotrimethylentrinitramin (CAS-Nr.121-82-4), Tetramethylentetranitramin (CAS-Nr. 2691-41-0), Hexanitroisowurtzitan (CAS-Nr. 14913-74-7), Nitroguanidin (CAS-Nr. 70-25-7), N-Methylnitramin (CAS-Nr. 479-45-8), Guanidinnitrat (CAS-Nr. 506-93-4), 1,1-Diamino-2,2-dinitroethylen, N-Guanylharnstoffdinitramid, 5-Aminotetrazol (CAS-Nr. 5378-49-4), Ethylendinitramin (CAS-Nr. 505-71-5) oder eine Kombination davon, **dadurch gekennzeichnet, dass** das thermoplastische Filament einen inerten Weichmacher umfasst, ausgewählt aus der Gruppe bestehend aus Phthalatester, Adipatester, Citratester und Stearinsäureester.

2. Thermoplastisches Filament nach Anspruch 1, **dadurch gekennzeichnet, dass** die Konzentration des mindestens einen energetischen Weichmachers und die Konzentration der Nitrocellulose zusammen mindestens 60 %, vorzugsweise mindestens 75 % des Gewichts des thermoplastischen Filaments ausmachen.

3. Thermoplastisches Filament nach einem der Ansprüche 1 oder 2, **dadurch gekennzeichnet, dass** der Stickstoffgehalt der Nitrocellulose zwischen 12,2 % und 13,6 % liegt.

4. Thermoplastisches Filament nach einem der Ansprüche 1 bis 3, **dadurch gekennzeichnet, dass** das thermoplastische Filament einen Querschnitt in runder, ovaler oder rechteckiger Form aufweist.

5. Thermoplastisches Filament nach einem der Ansprüche 1 bis 4, **dadurch gekennzeichnet, dass** das thermoplastische Filament den mindestens einen kristallinen Energieträger in einer Konzentration zwischen 1 und 30 Gew.-% umfasst.

6. Thermoplastisches Filament nach einem der Ansprüche 1 bis 5, **dadurch gekennzeichnet, dass** das thermoplastische Filament mindestens einen stabilisierenden Zusatzstoff umfasst, ausgewählt aus der Gruppe bestehend aus 3-Methyl-1,1-diphenylharnstoff (CAS-Nr. 13114-72-2), Diphenylamin (CAS-Nr. 122-39-4), 2-Nitrodiphenylamin (CAS-Nr. 119-75-5), Triphenylamin (CAS-Nr. : 603-34-9), 1,3-Diethyl-1,3-diphenylharnstoff (CAS-Nr. 85-98-3), 1,3-Dimethyl-1,3-diphenylharnstoff (CAS-Nr. 611-92-7) oder eine Mischung davon, vorzugsweise in einer Konzentration von 0,5 bis 5,0 Gew.-%.

7. Verwendung mindestens eines thermoplastischen Filaments gemäß einem der Ansprüche 1 bis 6 in einem Fused-Deposition-Modelling-Verfahren zur Herstellung von energetischen Objekten, die zum Antrieb von Projektilen in Waffen und für Feststoffraketenantriebe verwendet werden können.

8. Verwendung nach Anspruch 7, **dadurch gekennzeichnet, dass** mindestens zwei thermoplastische Filamente mit unterschiedlichem Energiegehalt und/oder unterschiedlichen Verbrennungsgeschwindigkeiten zur Herstellung des energetischen Objekts verwendet werden.

## Revendications

1. Filament thermoplastique destiné à être utilisé dans un processus de modélisation par dépôt de fil fondu (Fused Deposition Modeling, FDM) pour la fabrication d'objets énergétiques pouvant être utilisés pour la propulsion de projectiles dans des armes et pour des moteurs-fusées à propergol solide, comprenant au moins un plastifiant énergétique sélectionné parmi le groupe constitué de : méthylnitratoéthylnitramine (CAS-# 17096-47-8), éthylnitratoéthylnitramine (CAS-# 85068-73-1), propylnitratoéthylnitramine (CAS-# 82486-83-7), butylnitratoéthylnitramine (CAS-# 8246-82-6), dinitrate de diéthanolnitramine (CAS-# 4185-47-1), nitroglycérine (CAS-# 55-63-0), dinitrate de diéthylèneglycol (CAS-# 693-21) ou une combinaison de ceux-ci, et nitrocellulose ; dans lequel le rapport de la concentration dudit au moins un plastifiant énergétique sur la concentration de la nitrocellulose est compris entre 0,5:1 et 2:1 en poids, dans lequel le filament thermoplastique comprend au moins un composé énergétique cristallin sélectionné parmi le groupe constitué de : cyclotriméthylènetrinitramine (CAS-# 121-82-4), tétraméthylènetétranitramine (CAS-# 2691-41-0), hexanitroisowurtzitane (CAS-# 14913-74-7), nitroguanidine (CAS-# 70-25-7), N-metylnitramine (CAS-# 479-45-8), nitrate de guanidine (CAS-# 506-93-4), 1,1-diamino-2,2-dinitroetylène, dinitramide de N-guanylurée, 5-aminotétrazole (CAS-# 5378-49-4), éthylènedinitramine (CAS-# 505-71-5) ou une combinaison de ceux-ci ; **caractérisé en ce que** le filament thermoplastique comprend un plastifiant inerte sélectionné parmi le groupe constitué de : esters de phtalate, esters d'adipate, esters de citrate et esters stéariques.

2. Filament thermoplastique selon la revendication 1, **caractérisé en ce que** la concentration dudit au moins un plastifiant énergétique et la concentration de la nitrocellulose représentent conjointement au moins 60 %, de préférence au moins 75 %, du poids du filament thermoplastique.

3. Filament thermoplastique selon l'une quelconque des revendications 1 ou 2, **caractérisé en ce que** la teneur en azote de la cellulose est comprise entre 12,2 % et 13,6 %.

4. Filament thermoplastique selon l'une quelconque des revendications 1 à 3, **caractérisé en ce que** le filament thermoplastique présente une section transversale de forme ronde, ovale ou rectangulaire.

5. Filament thermoplastique selon l'une quelconque des revendications 1 à 4, **caractérisé en ce que** ledit filament thermoplastique comprend ledit au moins un composé énergétique cristallin dans une concentration comprise entre 1 et 30 % en poids.

6. Filament thermoplastique selon l'une quelconque des revendications 1 à 5, **caractérisé en ce que** ledit filament thermoplastique comprend au moins un additif stabilisant, sélectionné parmi le groupe constitué de : 3-méthyl-1,1-diphénylurée (CAS# 13114-72-2), diphénylamine (n° CAS 122-39-4), 2-nitrodiphénylamine (n° CAS 119-75-5), triphénylamine (n° CAS 603-34-9), 1,3-diphénylurée (n° CAS 85-98-3), 1,3-diméthyl-1,3-diphénylurée (n° CAS 611-92-7) ou un mélange de ceux-ci, de préférence dans une concentration de 0,5 à 5,0 % en poids.

7. Utilisation d'au moins un filament thermoplastique selon l'une quelconque des revendications 1 à 6 dans un processus de modélisation par dépôt de fil fondu (Fused Deposition Modeling, FDM) pour la fabrication d'objets énergétiques pouvant être utilisés pour la propulsion de projectiles dans des armes et pour des moteurs-fusées à propergol solide.

8. Utilisation selon la revendication 7, **caractérisée en ce qu'**au moins deux filaments thermoplastiques ayant des teneurs énergétiques différentes et/ou des vitesses de combustion différentes sont utilisés pour fabriquer ledit objet énergétique.
